# FASCICULE DE BREVET EUROPEEN

(11) **EP 1 268 365 B1**
(45) Date de publication et mention de la délivrance du brevet: **01.01.2020**
(21) Numéro de dépôt: 01913974.0
(22) Date de dépôt: 20.03.2001
(51) Int. Cl.: C05G 3/00, C05D 1/02

(54) **ADDITIFS ET COMPOSITIONS ANTIPOUSSIERES, LEUR PROCEDE D'OBTENTION ET LEURS UTILISATION DANS L'AMENDEMENT DES SOLS**
ZUSÄTZEN UND STAUBFREIZUSAMMENSETZUNGEN, VERFAHREN ZUR DEREN ERHALTUNG UND VERWENDUNG ALS BODENVERBESSERUNGSMITTEL
ADDITIVES AND DUST FREE COMPOSITIONS, METHOD FOR OBTAINING SAME AND USE FOR SOIL AMENDMENT

(30) Priorité: 21.03.2000 FR 0003818
(43) Date de publication de la demande: 02.01.2003
(73) Titulaire: Groupe Meac S.A.S., 28190 Saint Georges sur Eure (FR)
(72) Inventeur: GUERRINI, Etienne, F-28150 Voves (FR)
(74) Mandataire: Plougmann Vingtoft a/s
(86) Numéro de dépôt international: PCT/FR2001/000710
(87) Numéro de publication internationale: WO 2001/070648

(56) Documents cités:
- EP-A- 0 410 550
- DE-A- 1 909 564
- DE-A- 2 154 416
- FR-A- 2 518 426
- US-A- 4 107 274
- US-A- 5 383 952

## Description

### Secteur technique de l'invention :

L'invention concerne le secteur technique des produits et compositions utilisés pour l'amendement et/ou la fertilisation des productions agricoles telles que cultures, prairies, plans d'eau, forêts et autres, et plus particulièrement de nouveaux produits et compositions pulvérulents anti-poussière utilisables dans ces domaines.

L'invention concerne en premier lieu des additifs selon la revendication 1 conférant ladite caractéristique anti-poussière à de tels produits et compositions. L'invention concerne également le procédé d'obtention de ces nouveaux amendements et amendements-engrais ainsi que leurs utilisations selon les revendications 15 et 16.

Mention est aussi fait de l'emploi desdits additifs anti - poussière dans d'autres secteurs techniques où se pose le même type de problème lié à la génération et à la dissémination de grandes quantités de poussières, c'est à dire tous les secteurs où des produits pulvérulents, et éventuellement certains produits en granulés sont utilisés, manipulés, broyés, etc....

### Art antérieur :

L'homme de métier sait qu'il existe deux contraintes principales, totalement différentes.

D'une part les nécessités économiques conduisent à utiliser des produits de plus en plus performants, donc de plus en plus fins et créant ainsi de plus en plus de poussière car de nombreux essais agronomiques ont montré que cette performance est, toutes choses étant égales par ailleurs, liée à la finesse, et d'autre part les contraintes réglementaires ou non en matière d'environnement qui imposent quant à elles des produits non toxiques, non polluants et sans poussière.

Des essais de réduction des poussières ont été déjà effectués pour des granulés (EP 0 364 406) en ajoutant 0,1 à 20 parts d'additif du type polyglycol, polyéthylèneglycol, polypropylèneglycol et autres additifs analogues à 100 parties de substance particulaire (en granulés) mais ces traitements s'avèrent inefficaces pour des produits sous forme de poudre très fine non prétraitée.

On connaît également le brevet FR 2 723 085 qui décrit l'emploi d'une huile minérale, d'une amine, molasse, gomme etc... et une étape d'imprégnation.

On connaît encore le brevet WO 98 / 23705 qui décrit l'emploi d'huiles minérales et de polyoléfines (produits hydrophobes) et un processus d'agglomération et qui ne concerne que le secteur des grands travaux comme la construction de chaussées ou d'aires de stationnement.

Le brevet JP 62 171 919 décrit une chaux éteinte présentant une caractéristique anti-poussières par l'emploi de chlorure de calcium. Ce brevet concerne donc le même secteur technique général que l'invention mais, dans ce secteur général, il traite un problème technique tout à fait différent, qui est celui de la réduction des poussières générées par de la chaux éteinte.

Le brevet JP 7070563 utilise un polymère à groupes carboxy, pour un amendement à base de chaux.

Ces documents, limités à la chaux, confirment que le traitement de la chaux forme un secteur très spécifique.

On connaît encore le brevet JP 61 58047 qui solidifie les fines par un alcool ou un éther, et des paraffines liquides.

On connaît encore le brevet EP 0 908 433 qui prévient la formation de poussières par des mélanges de monoamines, stéarate d'aluminium et alcool gras, mais qui concerne le domaine différent des engrais granulés.

L'enseignement du brevet DD 232 389 relatif également au traitement de la chaux par CaCI2, concerne aussi le domaine différent des engrais granulés, le but étant de produire des « shaped particles » donc des granulés (ce qui n'est pas le but de l'invention).

Ces documents, limités aux granulés, confirment que le domaine des granulés forme un secteur très spécifique totalement différent du domaine de l'invention qui est le domaine des poudres ou des matières pulvérulentes.

On a encore utilisé des cires (WO 96 / 00199), et divers autres additifs.

L'enseignement des brevets US4107274 et DE1909564 concerne aussi le domaine des compositions anti-poussière.

La recherche a donc été très importante dans le secteur considéré, pour résoudre le problème de la génération de poussières, mais malgré tous ces efforts, dont certains ont apporté de réelles améliorations, existe encore à ce jour un besoin très important et reconnu de solutions permettant de réaliser un progrès décisif en la matière pour les poudres et les secteurs autres que les chaux.

### Problème technique :

De manière générale, le problème posé est de réduire au maximum, et si possible de supprimer, l'émission de poussières lors de la production, manipulation ou utilisation de matières pulvérulentes, notamment les amendements et amendements-engrais pour sols, et produits de technologie comparable.

Ces émissions de poussières présentent des inconvénients et des dangers considérables, tels que :
- perte de produit lors de la production et des manipulations (ensachage, versement d'un silo vers une benne, déversement au sol, etc....) et lors de l'utilisation notamment, en matière d'amendements agricoles, lors de l'épandage par des épandeurs (à rampes, à vis ou à disque ou analogues) ou lors du chargement de la benne du tracteur, etc....
- incertitude quant au dosage (en raison de la dispersion irrégulière par le vent) et donc absence de maîtrise de l'épandage.
- risques sanitaires.
- risques pour la protection de l'environnement, en raison de la dispersion de poussières vers des zones non souhaitables, voire création de brouillards dangereux pour la circulation, et analogues ;
- problèmes lors du stockage dit « à plat » c'est à dire à même le sol, ces problèmes se manifestant de deux manières :
   - si le stockage à plat a lieu sous hangar (ce qui n'est pas préféré car le hangar est occupé en surface et peu en hauteur, ce qui est donc une mauvaise utilisation de ce hangar, qui serait plus utile pour abriter du matériel ou d'autres produits), le cône formé lorsque l'on verse le produit pulvérulent sur le sol (par déchargement d'une benne, par exemple) présente une forte tendance à s'écrouler ; on occupe donc une surface encore plus grande, et, pire, la reprise, par exemple par un matériel du type « chargeuse », du produit ainsi « étalé » est ultérieurement très difficile car son épaisseur est faible et on perd de ce fait, finalement, beaucoup de produit sur le sol ;
   - si le stockage à plat a lieu en extérieur, dans un champ par exemple, on observe naturellement le même phénomène d'écroulement du cône et ses inconvénients inhérents, avec l'inconvénient très sérieux supplémentaire d'une dégradation de la maniabilité en cas d'exposition à la pluie, avec « mottage » (prise en masse plus ou moins compacte).

La demande du marché est donc très forte.

Cependant, le problème technique se complique du fait que, au moins pour le secteur agricole qui représente l'essentiel des applications de l'invention, le coût des techniques et des additifs doit rester très faible ; en effet, les marges agricoles sont si faibles que, si le coût est trop élevé, la technologie sera ignorée même si elle est performante ; il faut de plus, dans le même secteur, que la technologie proposée soit simple à utiliser et ne nécessite pas de modifications ou de changement des matériels agricoles classiques. En effet, un agriculteur n'aura pas le temps de mettre en œuvre des technologies compliquées, nécessitant des réglages fins, etc..... et ne pourra financer, pour le seul problème des poussières, l'acquisition d'épandeurs spéciaux.

De même, l'agriculteur n'aura pas de temps à consacrer à des nettoyages de matériel d'épandage plus fréquents que ceux occasionnés par les poudres de l'art antérieur : il faut donc proposer une technologie qui ne conduise pas à l'encrassement des bennes, épandeurs, etc......

Enfin, la technologie proposée ne doit en aucun cas conduire à un risque d'agglomération ou de granulation des poudres utilisées, ou d'une partie fine ou extra-fine de ces poudres, ni à aucun risque de « mottage » ; en effet, on utilise (malgré leurs inconvénients sérieux rappelés ci-dessus) des poudres pour leurs avantages plus importants et également bien connus en termes de propriétés agronomiques (produits fins, assimilation rapide, etc....).

Un objet de l'invention est de concilier contraintes techniques, pratiques (du secteur agricole notamment), économiques et réglementaires ou non en permettant l'épandage de produits très fins, sans émission significative de poussières lors de leur épandage et cependant très performants, c'est-à-dire ayant conservé totalement leur efficacité en tant qu'amendement.

Dans le but de résoudre le problème technique complexe rappelé ci-dessus, la Demanderesse a recherché et mis au point
- un nouveau type d'additif pour produit pulvérulent selon la revendication 1,
- capable de conférer à ce dernier des propriétés anti-poussière
- ce qui fait que ledit produit pulvérulent reste de très fine granulométrie et ne perd donc pas son efficacité agronomique, ne crée pas de poussière lors de sa production, sa manipulation ou son usage, ne crée en particulier pas de problème de collage et / ou d'encrassement des mécanismes des épandeurs et conserve les caractéristiques d'amendement et d'efficacité agronomiques nécessaires à son usage par épandage des sols, sans risque de mottage ou de granulation ou d'agglomération, qui seraient des inconvénients graves.

Un des buts de l'invention est la mise au point de nouveaux produits pulvérulents selon la revendication 12 (traités par les additifs anti-poussière selon l'invention) pour amendement ou amendements-engrais des sols et applications comparables, de diamètre médian de préférence inférieur ou égal à 200 micromètres, cette plage de granulométrie correspondant à une bonne efficacité agronomique.

La Demanderesse a également mis au point un procédé d'obtention de ces produits d'amendement à caractéristique anti-poussière.

### Résumé de l'invention :

L'invention concerne de manière générale l'emploi d'un additif minéral hygroscopique comme additif anti-poussières pour des produits et compositions pulvérulentes, notamment les amendements ou amendements-engrais tels que notamment les amendements crus ou les mélanges d'amendements crus avec le TSP (super phosphate triple), le chlorure de potassium et/ou le phosphate naturel et autre. La Demanderesse entend par amendement cru le produit support choisi parmi le carbonate de calcium et/ou la dolomie.

Selon la présente invention, de préférence, la caractéristique anti-poussière des produits pour l'amendement ou amendement-engrais des sols et autres applications citées dans la présente demande est obtenue par l'incorporation à ces produits d'au moins un additif anti-poussière selon l'invention, tel que décrit ci-dessous, et qui se compose selon sa caractéristique générale :
a) d'au moins un additif minéral hygroscopique
b) d'au moins un solvant commun, lequel peut être constitué, en tout ou en partie, d'un composé organique hydrophile (b).

### Description détaillée de l'invention :

L'invention concerne donc l'emploi d'un additif minéral hygroscopique comme additif anti-poussière pour des produits et compositions pulvérulents des amendements-engrais crus ou les mélanges d'amendements crus avec le TSP (super phosphate triple), le chlorure de potassium et/ou le phosphate naturel et autre.

Selon un mode de mise en œuvre tout à fait préféré, lesdits produits et compositions pulvérulentes sont choisis parmi, ou comprennent, les composants suivants:
- Support minéral naturel de diamètre médian inférieur ou égal à 100 micromètres, choisi par exemple parmi les carbonates de calcium naturels ou les carbonates doubles de calcium et de magnésium ou dolomies.
- éventuellement des composés tels que le phosphate naturel, le chlorure de potassium ou leurs mélanges et analogues ou bien encore le super triple phosphate et autres,
- ainsi que les divers mélanges des produits pulvérulents ci-dessus, en proportions variées connues de l'homme de métier, et
éventuellement en mélange avec d'autres additifs mineurs classiques à usage dans le secteur technique considéré, tels que notamment les oligo-éléments et autres.

L'homme de métier saura effectuer les essais simples de routine qui lui permettront de vérifier la diminution de poussière et l'absence d'inconvénients, ou au contraire l'apparition d'inconvénients tels que poussière, granulation ou agglomération même partielle, « mottage », encrassement, et analogues, auquel cas l'additif mineur considéré ne devra pas être utilisé.

Selon un mode de réalisation tout à fait préféré, l'additif minéral hygroscopique est le chlorure de calcium ou le chlorure de magnésium.

Le chlorure de calcium était auparavant connu comme adjuvant de granulation ; il est rappelé que, au contraire, l'invention vise à surtout ne PAS former de granulés, ou mottes d'aucune sorte. L'emploi du CaCl2 était donc a priori contre-indiqué.

Par ailleurs, un additif hygroscopique (il est rappelé que le CaCl2 est très hygroscopique) paraissait de toutes façons rigoureusement déconseillé pour traiter des produits pulvérulents, car :
- d'une part le caractère hygroscopique pouvait faire craindre une reprise d'eau au niveau des fines et donc une granulation, ou un « mottage », risques inacceptables ;
- d'autre part, ce même caractère hygroscopique devait logiquement faire craindre le pire, comme une prise en masse, en cas de stockage à plat en extérieur ; or il n'en est rien, et au contraire, au stockage à plat :
   - sous hangar ou en extérieur, on peut former un cône élevé et bien net, qui ne s'écroule pas
   - en extérieur, le produit peut rester sous la pluie et il a été constaté que le produit ne prend pas en masse, et qu'il est résistant à la pénétration à l'eau.
   - au terme de l'essai dont plusieurs jours de pluie, le produit est manipulable sensiblement comme il l'était avant l'exposition aux intempéries.

Ce résultat est non seulement très surprenant, et même illogique, mais il est aussi très important en agriculture: il signifie que les agriculteurs pourront dorénavant stocker les produits pulvérulents concernés « à plat » et en extérieur, sans crainte de perte ou d'endommagement du produit, prise en masse, affaissement du cône, problèmes de reprise avant utilisation etc..., et pourront donc libérer leurs silos ou leurs hangars pour d'autres affectations. Outre le chlorure de calcium et le chlorure de magnésium, on pourra utiliser le nitrate de magnésium, le nitrate de calcium et leurs sels.

L'ensemble est d'autant plus surprenant que l'effet positif semble être (cf. essais ci-dessous) en proportion du caractère hygroscopique de ces produits, au moins pour les composés testés à ce jour.

Selon un mode de réalisation de l'invention, il est possible de combiner l'additif minéral hygroscopique (a) avec un composé organique hydrophile (b).

Le fait que ce composé organique (b) doive être hydrophile est surprenant, pour la même raison que le caractère hygroscopique de l'additif minéral (a). Selon un mode de réalisation particulier, on utilisera comme composant organique hydrophile (b) un composé comme la glycérine ou la triéthanolamine (TEA), ou leurs mélanges, ou autres.

Comme solvant (c), on utilisera l'eau ou un alcool ou un glycol ou polyglycol comme le polyéthylèneglycol (PEG) et préférentiellement de l'eau, et composés analogues que l'homme de métier saura sélectionner à la lecture des exemples qui suivent.

Comme indiqué plus haut, les solvants (c) utilisables avec profit selon l'invention peuvent former tout ou partie du ou des composés organiques hydrophiles (b), comme par exemple la triéthanolamine (TEA) ou un polyéthylèneglycol (PEG).

Selon un mode de réalisation particulier, l'additif selon l'invention est formé de :
a) un additif hygroscopique comme le chlorure de calcium ou le chlorure de magnésium ou l'un des autres sels décrits ci-dessus et très préférentiellement le chlorure de calcium ou le chlorure de magnésium;
b) la glycérine, la TEA ou autre
c) éventuellement l'eau ou le complément de solvant (PEG ou alcool).

Par contre, cf. les essais ci-dessous, l'emploi de composés organiques de type (b) seuls ne donnent aucun résultat sur la réduction de la production de poussières.

Les essais ci-dessous montrent également que la granulométrie de la poudre traitée peut être variable, sans que la variation de granulométrie affecte l'efficacité du traitement.

On pourra par exemple traiter des produits pulvérulents comme des carbonates de calcium et analogues, cf. liste ci-dessus, de granulométrie de diamètre médian inférieur ou égal à 200 micromètres.

Il est encore très important de noter, cf. les essais ci-dessous, que le traitement selon l'invention n'affecte pas les propriétés agronomiques des produits pulvérulents considérés, représentées essentiellement par la solubilité carbonique.

Dans le domaine agricole, l'intérêt technique de l'anti-poussière se manifeste dans trois chaînes de manutention :
1) transport par benne
   stockage à plat en bout de champ ou sur plate-forme extérieure non couverte
   reprise par godet ou « chargeuse »
   épandage (à vis, à disque,...)
2) transport par benne
   stockage à plat sous hangar
   reprise par godet ou chargeuse
   transport par benne (ou citerne)
   épandage (à vis, à disque,...)
3) transport en citerne jusqu'au silo
   dépotage silo vers une benne ou citerne
   transport par benne (ou citerne)
   épandage (à vis, à disque,...)

L'invention concerne :
- les additifs anti-poussières en eux mêmes,
- les produits pulvérulents ou poudres tels que ceux utilisés en amendement et/ou amendement-engrais de sol, et décrits ci-dessus, caractérisés en ce qu'ils ont été traités par une quantité d'au moins un additif anti-poussière efficace pour leur conférer une qualité anti-poussière, éventuellement en mélange avec d'autres additifs classiques en agronomie et compatibles ;
- le procédé de préparation de ces produits pulvérulents ou poudres, caractérisé en ce qu'il consiste à mélanger intimement de façon spécifique lesdits produits pulvérulents ou poudre avec ladite quantité efficace d'additif(s) anti-poussière.

La quantité desdits additifs peut atteindre jusqu'à 2 % en poids, préférentiellement entre 0,6 % et 1,6 % en poids et très préférentiellement 1 % en poids par rapport au mélange total.

D'autres caractéristiques et avantages de l'invention seront mieux compris à la lecture de la description qui va suivre, et en se référant aux exemples non limitatifs suivants, et aux figures annexées sur lesquelles :

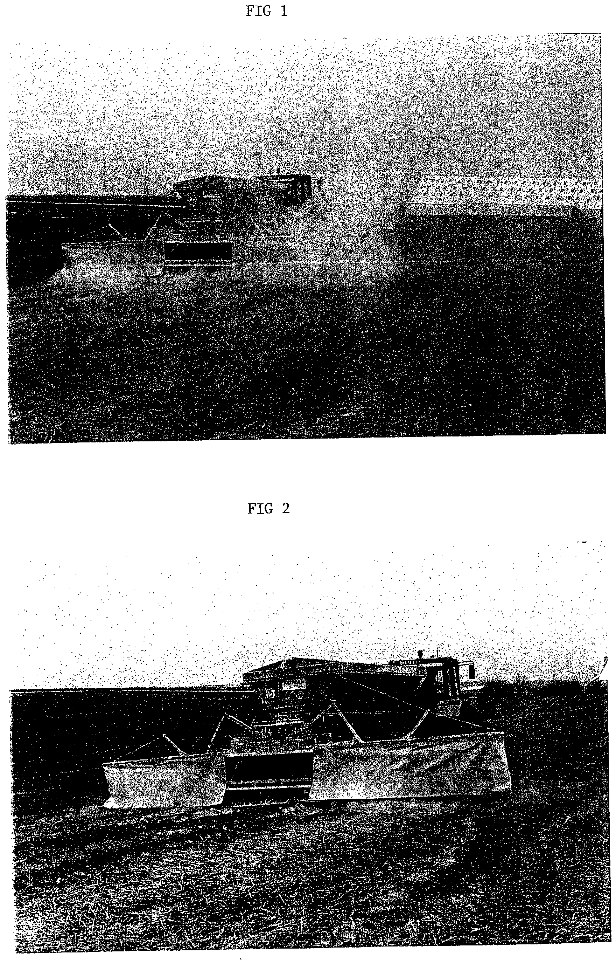

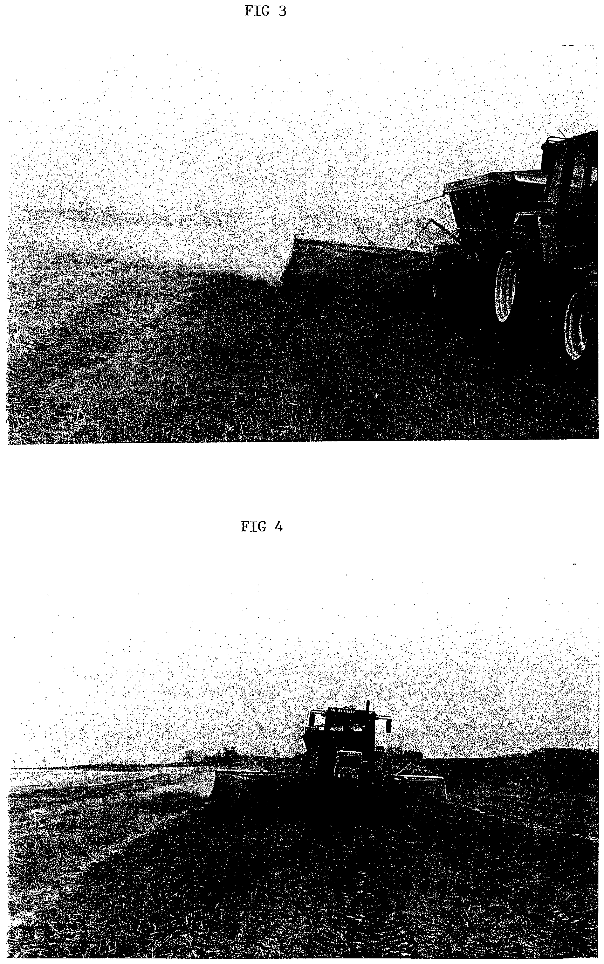

- les figures 1 et 3 représentent l'épandage d'un produit non traité de l'art antérieur
- les figure 2 et 4 représentent le même épandage du même produit mais traité avec un additif selon l'invention.

### EXEMPLE 1

Cet exemple a pour but de déterminer l'efficacité antipoussière d'un additif sur différentes poudres, par variation de la nature de la poudre.

Pour ce faire, et pour chacun des essais de l'exemple, on détermine la quantité d'émission de poussière du carbonate de calcium au moyen d'un Dustmeter™ de type I.

En effet, on utilise pour les mesures de poussières un appareil « Dustmeter »™ connu de l'homme de métier qui permet de mettre en évidence (et de quantifier) la génération de poussière d'une production donnée (poudres, compactés, engrais, pigments organiques, oxydes métalliques...)

Il existe 3 types de Dustmeter™ dont :

| | |
|---|---|
| • le type I : | englobe un large domaine de poudres et de poussières |
| • le type II : | spécifique par rapport à l'alimentation animale. |
| • le type III : | spécifique aux granulés. |

Pour ce faire, on place l'échantillon de carbonate de calcium dans une cuve rotative. Cette cuve, dotée de pales internes, permet de "brasser" le carbonate. Les fines générées par ce "brassage" sont transportées par un courant d'air constant horizontal au travers d'un tube en verre, jusqu'à une unité de filtration. Le débit de ce courant d'air est de 20 litres / min. Les plus "lourdes" se déposent dans ce tube en verre (qui s'apparente à un séparateur de particules), tandis que les particules ultrafines sont entraînées jusqu'au filtre préalablement pesé. Par pesée du filtre avant et après test, on détermine la quantité de poussière générée par le carbonate de calcium testé.

Les résultats obtenus sont :
- pour le témoin, essai n° 1, qui est un carbonate de calcium d'Erbray de diamètre médian égal à 30 micromètres non traité : 1780g/t
- pour l'invention, essai n° 2, qui est un carbonate de calcium d'Erbray de diamètre médian égal à 30 micromètres traité à 1 % en poids d'un additif (additif n° 1 selon l'invention) de composition pondérale égale à 36 % de chlorure de calcium, 5 % de glycérine et 59 % d'eau (provenant d'une solution commerciale de CaCl₂.2H₂O soit 45 % d'une solution aqueuse de chlorure de calcium garantis à 80 % de CaCl₂, 5 % de glycérine et 50 % d'eau): 83 g/t,
- pour le témoin, essai n° 3, qui est un carbonate de calcium d'Erbray de diamètre médian égal à 40 micromètres non traité : 1547g/t
- pour l'invention, essai n° 4, qui est un carbonate de calcium d'Erbray de diamètre médian égal à 40 micromètres traité à 1 % en poids de l' additif n° 1 selon l'invention: 207 g/t,
- pour le témoin, essai n° 5, qui est un carbonate de calcium de Sillars de diamètre médian égal à 65 micromètres non traité : 2773g/t
- pour l'invention, essai n° 6, qui est un carbonate de calcium de Sillars de diamètre médian égal à 65 micromètres traité à 1 % en poids de l'additif n° 1 selon l'invention: 33 g/t,
- pour le témoin, essai n° 7, qui est un carbonate de calcium de Saint-Césaire de diamètre médian égal à 30 micromètres non traité : 1360g/t
- pour l'invention, essai n° 8, qui est un carbonate de calcium de Saint-Césaire de diamètre médian égal à 30 micromètres traité à 1 % en poids de l' additif n° 1 selon l'invention: 17 g/t,
- pour le témoin, essai n° 9, qui est un carbonate de calcium d'Ecouché de diamètre médian égal à 100 micromètres non traité : 763g/t
- pour l'invention, essai n° 10, qui est un carbonate de calcium d'Ecouché de diamètre médian égal à 100 micromètres traité à 1 % en poids de l' additif n° 1 selon l'invention: 53 g/t,
- pour le témoin, essai n° 11, qui est un carbonate de calcium de Maxey de diamètre médian égal à 4 micromètres non traité : 1140g/t
- pour l'invention, essai n° 12, qui est un carbonate de calcium de Maxey de diamètre médian égal à 4 micromètres traité à 1 % en poids de f additif n° 1 selon l'invention: 77 g/t,

L'efficacité de l'anti-poussière s'appuie sur plusieurs propriétés mesurables :
- diminution du taux de poussières lors de la manipulation des produits traités anti-poussière,
- pas de perturbation des propriétés intrinsèques du matériau de base,
- angle de talus plus élevé en stockage à plat,
- écoulement mieux maîtrisé (moins de fuites) dans les transvasements (épandeurs, raidlers, silos,...)

La lecture des résultats de mesure des quantités d'émission de poussières des différents essais précédents permet de constater une baisse significative de la quantité de poussières émise par les produits de l'invention.

### EXEMPLE 2

Cet exemple a pour but de déterminer l'efficacité anti-poussière de différents additifs anti-poussière sur une même poudre. Cette poudre est un carbonate de calcium d'Erbray de diamètre médian égal à 30 micromètres.

Pour ce faire, trois sortes d'adjuvants sont testés en laboratoire :
- des solutions de sels hygroscopiques (a)
- des solutions de composés organiques hydrophiles (b)
- des combinaisons des solutions de sels hygroscopiques (a) et de composés organiques (b)
avec la même méthode que celle de l'exemple 1 et avec le même appareil Dustmeter™.

### Essai n° 13

Cet essai illustre l'invention et met en œuvre le carbonate de calcium d'Erbray traité avec 1 % en poids d'un additif (additif selon l'invention n° 2) de composition pondérale égale à 36 % de chlorure de calcium (provenant de 45 % d'une solution commerciale de CaCl₂.2H₂O garantis à 80 % de CaCl₂) et 64 % d'eau.

### Essai n° 14

Cet essai illustre l'invention et met en œuvre le carbonate de calcium d'Erbray traité avec 1 % en poids d'un additif (additif selon l'invention n° 3) de composition pondérale égale à 28 % de chlorure de calcium (provenant de 45 % d'une solution commerciale de CaCl₂.2H₂O garantis à 80 % de CaCl₂) et 72 % d'eau.

### Essai n° 15

Cet essai illustre l'invention et met en œuvre le carbonate de calcium d'Erbray traité avec 1 % en poids d'un additif (additif selon l'invention n° 4) de composition pondérale égale à 20 % de chlorure de calcium (provenant de 45 % d'une solution commerciale de CaCl₂.2H₂O garantis à 80 % de CaCl₂) et 80 % d'eau.

### Essai n° 16

Cet essai illustre l'invention et met en œuvre le carbonate de calcium d'Erbray traité avec 1 % en poids d'un additif (additif selon l'invention n° 5) de composition pondérale égale à 36 % de nitrate de calcium et 64 % d'eau.

### Essai n° 17

Cet essai illustre l'invention et met en œuvre le carbonate de calcium d'Erbray traité avec 1 % en poids d'un additif (additif selon l'invention n° 6) de composition pondérale égale à 36 % de nitrate de magnésium et 64 % d'eau.

### Essai n° 18

Cet essai illustre l'invention et met en œuvre le carbonate de calcium d'Erbray traité avec 1 % en poids d'un additif (additif selon l'invention n° 7) de composition pondérale égale à 30 % de chlorure de magnésium de laboratoire (provenant d'une solution commerciale de MgCl₂.6H₂O garantis à 46 % de MgCl₂) et 70 % d'eau.

### Essai n° 19

Cet essai illustre l'invention et met en œuvre le carbonate de calcium d'Erbray traité avec 1 % en poids d'une solution aqueuse saturée de chlorure de sodium (additif selon l'invention n° 8).

### Essai n° 20

Cet essai met en œuvre le carbonate de calcium d'Erbray traité avec 1 % en poids d'une solution aqueuse saturée de sulfate de magnésium.

### Essai n° 21

Cet essai met en œuvre le carbonate de calcium d'Erbray traité avec 1 % en poids de glycérine.

### Essai n° 22

Cet essai met en œuvre le carbonate de calcium d'Erbray traité avec 1 % en poids d'un additif de composition pondérale égale à 70 % de glycérine et 30 % d'eau.

### Essai n° 23

Cet essai met en œuvre le carbonate de calcium d'Erbray traité avec 1 % en poids d'un additif de composition pondérale égale à 70 % de TEA (triéthanolamine) et 30 % d'eau.

### Essai n° 24

Cet essai met en œuvre le carbonate de calcium d'Erbray traité avec 1 % en poids d'un additif de composition pondérale égale à 70 % de polyéthylèneglycol et 30 % d'eau.

### Essai n° 25

Cet essai illustre l'invention et met en œuvre le carbonate de calcium d'Erbray traité avec 1 % en poids d'un additif (additif selon l'invention n° 9) de composition pondérale égale à 38 % de chlorure de calcium, 5 % de glycérine et 57 % d'eau.

### Essai n° 26

Cet essai illustre l'invention et met en œuvre le carbonate de calcium d'Erbray traité avec 1 % en poids d'un additif (additif selon l'invention n° 10) de composition pondérale égale à 36 % de chlorure de calcium, 5 % de TEA et 59 % d'eau.

### Essai n° 27

Cet essai illustre l'invention et met en œuvre le carbonate de calcium d'Erbray traité avec 1 % en poids d'un additif (additif selon l'invention n° 11) de composition pondérale égale à 36 % de chlorure de calcium, 5 % de polyéthylèneglycol et 59 % d'eau.

### Essai n° 28

Cet essai illustre l'invention et met en œuvre le carbonate de calcium d'Erbray traité avec 1 % en poids d'un additif (additif selon l'invention n° 12) de composition pondérale égale à 36 % de chlorure de calcium, 5 % d'éthylèneglycol et 59 % d'eau.

### Essai n° 29

Cet essai illustre l'invention et met en œuvre le carbonate de calcium d'Erbray traité avec 1 % en poids d'un additif (additif selon l'invention n° 13) de composition pondérale égale à 30 % de chlorure de magnésium pour laboratoire, 5 % de glycérine et 65 % d'eau.

### Essai n° 30

Cet essai illustre l'invention et met en œuvre le carbonate de calcium d'Erbray traité avec 1 % en poids d'un additif (additif selon l'invention n° 14) de composition pondérale égale à 36 % de nitrate de magnésium, 5 % de glycérine et 59 % d'eau.

### Essai n° 31

Cet essai illustre l'invention et met en œuvre le carbonate de calcium d'Erbray traité avec 1 % en poids d'un additif (additif selon l'invention n° 15) de composition pondérale égale à 36 % de chlorure de calcium, 10 % de glycérine et 54 % d'eau.

### Essai n° 32

Cet essai illustre l'invention et met en œuvre le carbonate de calcium d'Erbray traité avec 1 % en poids d'un additif (additif selon l'invention n° 16) de composition pondérale égale à 30 % de chlorure de magnésium d'origine industrielle, 5 % de glycérine et 65 % d'eau.

### Essai n° 33

Cet essai illustre l'invention et met en œuvre le carbonate de calcium d'Erbray traité avec 1 % en poids d'un additif (additif selon l'invention n° 17) de composition pondérale égale à 36 % de chlorure de magnésium, 5 % de TEA et 59 % d'eau.

### Essai n° 34

Cet essai illustre l'invention et met en œuvre le carbonate de calcium d'Erbray traité avec 1 % en poids d'un additif (additif selon l'invention n° 18) de composition pondérale égale à 30 % de chlorure de magnésium industriel ( provenant d'une solution commerciale de MgCl₂.6H₂O garantis à 46 % de MgCl₂) et 70 % d'eau.

Les résultats des mesures sont rassemblés dans le Tableau 1 suivant.

**TABLEAU 1**

| Essai n° | Dosage de l'adjuvant à 1 % en g / tonne de carbonate | |
|---|---|---|
| | | |
| | J0 | J+1 |
| Référence poudre: CaC0₃ non traité | 1100 | |
| | | |
| 13 (**) | 130 | |
| 14 (**) | 180 | |
| 15 | 250 | |
| 16 (°) | 220 | 1360 |
| 17 | 165 | 250 |
| 18 (**) | 167 | |
| 19 (°) | 85 | 1200 |
| 20 (+) | 930 | 1475 |
| | | |
| | | |
| 21 | 1493 | 635 |
| 22 | 320 | 360 |
| 23 | 825 | 785 |
| 24 | 585 | 695 |
| 25 | 90 | 60 |
| 26 | 85 | 80 |
| 27 | 95 | 80 |
| 28 | 95 | 55 |
| 29 | 65 | 55 |
| 30 | 140 | 145 |
| 31 | 90 | 50 |
| 32 | 55 | 55 |
| 33 | 60 | 65 |
| 34 | 110 | 205 |
| | | |

| | | |
|---|---|---|
| J0 = sortie de fabrication J + 1 = après 24 h de stockage | | |

Les essais (**) sont excellents puisque l'on passe d'une valeur témoin de l'ordre de 1100 à des valeurs de l'ordre de 100 - 130 - 170 et qui se maintiennent dans le temps.
Les essais marqués (°) donnent un bon résultat en instantané mais qui ne tient absolument pas dans le temps.

L'essai marqué (+) donne un mauvais résultat en instantané, qui empire avec le temps.

Tous les essais peuvent être considérés comme excellents à très satisfaisants, sauf les essais marqués (°) et (+).

On remarque que les solutions de chlorure de calcium et de chlorure de magnésium ont un bon comportement anti-poussière dans le temps (le taux de poussière diminue).

Les autres solutions permettent de diminuer les émissions de poussière de la même façon que celles-ci à JO mais perdent vite de leur efficacité.

La glycérine (essai n° 21) utilisée seule a un effet négatif sur le dégagement de poussière, puisqu'elle augmente ce dégagement.
Les produits organiques en solution font baisser un peu le taux de poussière (on passe de 1000 à 300, 500 ou 800 en ordre de grandeur) mais absolument pas de manière suffisante à savoir inférieure à 200.

Les différentes qualités de chlorure de calcium ou de magnésium n'ont pas d'influence déterminante sur la qualité du traitement.

### EXEMPLE 3

Cet exemple concerne le traitement du carbonate de calcium par plusieurs adjuvants selon l'invention et l'évolution du traitement dans le temps.

Des tests de vieillissement ont été menés en laboratoire et ont été reconduits avec les adjuvants suivants :
- l'additif selon l'invention n° 1 pour l'essai n° 35 qui illustre l'invention,
- l'additif selon l'invention n° 2 pour l'essai n° 36 qui illustre l'invention,
- l'additif selon l'invention n° 7 pour l'essai n° 37 qui illustre l'invention,
- l'additif selon l'invention n° 10 pour l'essai n° 38 qui illustre l'invention,
- l'additif selon l'invention n° 11 pour l'essai n° 39 qui illustre l'invention,
- l'additif selon l'invention n° 12 pour l'essai n° 40 qui illustre l'invention,
- l'additif selon l'invention n° 13 pour l'essai n° 41 qui illustre l'invention,
- l'additif selon l'invention n° 18 pour l'essai n° 42 qui illustre l'invention,
- l'additif selon l'invention n° 16 pour l'essai n° 43 qui illustre l'invention.

On suit l'évolution de ces traitements dans le temps à J0 et J + 3.
Le carbonate est traité à 1 % d'adjuvant.

Les résultats sont rassemblés dans le tableau 2 qui suit.

**TABLEAU 2**

| Essai n° | J0 en g/tonne | J + 3 en g/tonne |
|---|---|---|
| Non traité | 1270 | |
| 35 | 140 | 115 |
| 36 | 120 | 115 |
| | | |
| 37 | 115 | 130 |
| 38 | 180 | 130 |
| 39 | 175 | 170 |
| 40 | 155 | 130 |
| 41 | 140 | 140 |
| 42 | 110 | 100 |
| 43 | 165 | 125 |

Les résultats reflètent que, en général, on produit moins de poussière à J + 3 qu'à J0.

La lecture du tableau précédent montre que le traitement est aussi efficace dans le temps qu'au départ, voire qu'il s'améliore, propriété jusqu'alors inconnue avec les produits de l'art antérieur.

### EXEMPLE 4

Cet exemple concerne différente granulométrie du carbonate de calcium et permet de mettre en évidence la conservation de la propriété essentielle de solubilité carbonique, avant et après traitement d'une poudre par un additif selon l'invention.

### Essai n° 44 :

Cet essai, qui illustre le témoin, met en œuvre un carbonate de calcium d'Erbray de diamètre médian égal à 30 micromètres.

La mesure d'émission de poussière effectuée avec le même mode opératoire que dans l'exemple 1 donne une valeur de 1780 g/t.

La mesure de solubilité organique définie selon la norme NF U44-174 et la norme NF U44-001 en laboratoire donne une valeur de 57%.

### Essai n° 45 :

Cet essai, qui illustre l'invention, met en œuvre un carbonate de calcium d'Erbray de diamètre médian égal à 30 micromètres traité par 1 % en poids de l'additif anti-poussière n ° 1 selon l'invention .

La mesure d'émission de poussière effectuée avec le même mode opératoire que dans l'exemple 1 donne une valeur de 83 g/t.

La mesure de solubilité organique définie selon la norme NF U44-174 et la norme NF U44-001 en laboratoire donne une valeur de 59%.

### Essai n° 46 :

Cet essai, qui illustre le témoin, met en œuvre un carbonate de calcium d'Erbray de diamètre médian égal à 200 micromètres.

La mesure d'émission de poussière effectuée avec le même mode opératoire que dans l'exemple 1 donne une valeur de 1440 g/t.

La mesure de solubilité organique définie selon la norme NF U44-174 et la norme NF U44-001 en laboratoire donne une valeur de 37%.

### Essai n° 47 :

Cet essai, qui illustre l'invention, met en œuvre un carbonate de calcium d'Erbray de diamètre médian égal à 200 micromètres traité par 1 % en poids de l'additif anti-poussière n ° 1 selon l'invention.

La mesure d'émission de poussière effectuée avec le même mode opératoire que dans l'exemple 1 donne une valeur de 40 g/t.

La mesure de solubilité organique définie selon la norme NF U44-174 et la norme NF U44-001 en laboratoire donne une valeur de 42%.

Les différents résultats sont répertoriés dans le tableau 3 suivant

**TABLEAU 3**

| | | | | |
|---|---|---|---|---|
| | Essais n° | | Essais n° | |
| | 44 | 45 | 46 | 47 |
| Diamètre médian (µm) | 30 | - | 200 | - |
| Emission de poussières(g/t) | 1 780 | 83 | 1 440 | 40 |
| Solubilité carbonique(%) | 57 | 59 | 37 | 42 |

La lecture du tableau 3 précédent met en évidence l'efficacité anti-poussière des produits selon l'invention quelle que soit leur granulométrie ainsi que la conservation de la propriété de solubilité organique avant et après traitement d'une poudre par un additif selon l'invention.

### EXEMPLE 5

Cet exemple concerne le traitement de différents carbonates de calcium par diverses quantités d'additif selon l'invention.

Pour ce faire avec le même mode opératoire que dans l'exemple 1, on mesure la quantité de poussière générée par les différents carbonates de calcium traités selon les diverses doses d'additif suivant, selon l'invention.

### Essai n° 48 :

Cet essai, qui illustre l'invention, met en œuvre un carbonate de calcium d'Erbray de diamètre médian égal à 30 micromètres traité à l'aide de 0,4 % en poids de l'additif anti-poussière n° 1 selon l'invention.

### Essai n° 49 :

Cet essai, qui illustre l'invention, met en oeuvre un carbonate de calcium d'Erbray de diamètre médian égal à 30 micromètres traité à l'aide de 0,6 % en poids de l'additif anti-poussière n° 1 selon l'invention.

### Essai n° 50 :

Cet essai, qui illustre l'invention, met en œuvre un carbonate de calcium d'Erbray de diamètre médian égal à 30 micromètres traité à l'aide de 0,8 % en poids de l'additif anti-poussière n° 1 selon l'invention.

### Essai n° 51 :

Cet essai, qui illustre l'invention, met en œuvre un carbonate de calcium d'Erbray de diamètre médian égal à 30 micromètres traité à l'aide de 1,0 % en poids de l'additif anti-poussière n ° 1 selon l'invention.

### Essai n° 52 :

Cet essai, qui illustre l'invention, met en œuvre un carbonate de calcium d'Erbray de diamètre médian égal à 30 micromètres traité à l'aide de 1,2 % en poids de l'additif anti-poussière n ° 1 selon l'invention.

### Essai n° 53 :

Cet essai, qui illustre l'invention, met en œuvre un carbonate de calcium d'Erbray de diamètre médian égal à 30 micromètres traité à l'aide de 1,4 % en poids de l'additif anti-poussière n ° 1 selon l'invention.

### Essai n° 54 :

Cet essai, qui illustre l'invention, met en œuvre un carbonate de calcium d'Erbray de diamètre médian égal à 30 micromètres traité à l'aide de 1,6 % en poids de l'additif anti-poussière n ° 1 selon l'invention.

### Essai n° 55 :

Cet essai illustre l'art antérieur mettant en œuvre un carbonate de calcium de Villeau de diamètre médian égal à 12 micromètres non traité.

### Essai n° 56 :

Cet essai, qui illustre l'invention, met en œuvre un carbonate de calcium de Villeau de diamètre médian égal à 12 micromètres traité à l'aide de 0,4 % en poids de l'additif anti-poussière n°1 selon l'invention.

### Essai n° 57 :

Cet essai, qui illustre l'invention, met en œuvre un carbonate de calcium de Villeau de diamètre médian égal à 12 micromètres traité à l'aide de 0,6 % en poids de l'additif anti-poussière n ° 1 selon l'invention.

### Essai n° 58 :

Cet essai, qui illustre l'invention, met en œuvre un carbonate de calcium de Villeau de diamètre médian égal à 12 micromètres traité à l'aide de 0,8 % en poids de l'additif anti-poussière n ° 1 selon l'invention.

### Essai n° 59 :

Cet essai, qui illustre l'invention, met en œuvre un carbonate de calcium de Villeau de diamètre médian égal à 12 micromètres traité à l'aide de 1,0 % en poids de l'additif anti-poussière n ° 1 selon l'invention.

### Essai n° 60 :

Cet essai, qui illustre l'invention, met en œuvre un carbonate de calcium de Villeau de diamètre médian égal à 12 micromètres traité à l'aide de 1,2 % en poids de l'additif anti-poussière n ° 1 selon l'invention.

Les différents résultats sont répertoriés dans le tableau 4 suivant :

**TABLEAU 4**

| | ESSAI n° | Taux de traitement (% en poids) | Quantité de poussière émise (g/T à J = 0) |
|---|---|---|---|
| Invention | 48 | 0,4 | 690 |
| Invention | 49 | 0,6 | 220 |
| Invention | 50 | 0,8 | 120 |
| Invention | 51 | 1,0 | 100 |
| Invention | 52 | 1,2 | 60 |
| Invention | 53 | 1,4 | 50 |
| Invention | 54 | 1,6 | 50 |
| Art antérieur | 55 | 0 | 5 250 |
| Invention | 56 | 0,4 | 920 |
| Invention | 57 | 0,6 | 180 |
| Invention | 58 | 0,8 | 40 |
| Invention | 59 | 1,0 | 15 |
| Invention | 60 | 1,2 | 10 |

La lecture du tableau 4 montre que l' émission de poussière diminue rapidement même à un faible taux de traitement et met en évidence l'efficacité anti-poussière des produits selon l'invention pour diverses doses d'additif selon l'invention.

### EXEMPLE 6

Cet exemple concerne la tenue à la pluie des produits selon l'invention.

Pour ce faire, deux tests différents ont été réalisés.

Le premier test consiste à mesurer le temps mis par une quantité donnée de carbonate de calcium contenu dans une éprouvette pour absorber une quantité donnée d'eau.

Ainsi, pour chaque essai, on verse 40 ml d'eau dans une éprouvette contenant 500ml d'un carbonate de calcium à tester.

### Essai n° 61 :

Cet essai illustrant l'art antérieur met en œuvre un carbonate de calcium non traité. Le temps d'absorption de l'eau est de 1 à 2 minutes.

### Essai n° 62 :

Cet essai illustrant l'invention met en œuvre le même carbonate de calcium que précédemment mais traité avec 1% en poids de l'additif anti-poussière n ° 1 selon l'invention.
Le temps d'absorption de l'eau est de 45 minutes.

Le deuxième test consiste à mesurer l'humidification d'un tas de carbonate de calcium et est appelé "test pluie".

Pour ce faire, on verse une quantité donnée d'eau au moyen d'un arrosoir sur un tas de 30 kg de carbonate de calcium à tester.

Le carbonate de calcium de l'art antérieur non traité absorbe immédiatement l'eau alors que cette dernière roule sur le carbonate de calcium traité selon l'invention. Ce dernier est beaucoup plus difficile à mouiller montrant qu'il y a une imperméabilisation du produit selon l'invention.

## Revendications

1. Additif anti-poussière permettant la maîtrise de l'ecoulement et de la manipulation des amendements-engrais crus, **caractérisé en ce qu'**il comprend un support minéral naturel de diamètre médian inférieur ou égal à 200 micromètres choisi par exemple parmi les carbonates de calcium naturels ou les carbonates doubles de calcium et de magnésium ou dolomites, et qu'il comprend au moins un additif minerai hygroscopique choisi parmi le chlorure de calcium, le chlorure de magnésium, le nitrate de magnésium, le nitrate de calcium et leurs sels.

2. Additif selon la revendication 1, **caractérisé en ce que** qu'il se compose :
(a) d'au moins un additif minéral hygroscopique
(b) d'au moins un solvant commun, lequel peut être constitué, en tout ou en partie, d'un composé organique hydrophile.

3. Additif selon l'une quelconque des revendications 1 et 2, **caractérisé en ce qu'**il comprend de plus au moins un composé organique hydrophile.

4. Additif selon l'une quelconque des revendications 1 à 3 **caractérisé en ce qu'**il est adapté aux produits et compositions pulvérulentes qui sont choisis parmi, ou comprennent, les composants suivants :
- éventuellement des composés tels que le phosphate naturel, le chlorure de potassium ou leurs mélanges ou bien encore le super triple phosphate ,
ainsi que les divers mélanges des produits pulvérulents ci-dessus, en proportions variées, et éventuellement en mélange avec d'autres additifs mineurs classiques à usage dans le secteur technique considéré, tels que notamment les oligo-éléments,
et de preference sont choisis parmi, ou comprennent, les" produits pulvérulents " suivants :
- Support minéral naturel de diamètre médian inférieur ou égal à 100 micrometres choisi par exemple parmi les carbonates de calcium naturels ou les carbonates doubles de calcium et de magnésium ou dolomites,
- éventuellement des composés tels que le phosphate naturel, le chlorure de potassium au leurs mélanges au bien encore le super triple phosphate,
ainsi que les divers mélanges des produits pulvérulents ci-dessus, en proportions variées connues , et
éventuellement en mélange avec d'autres additifs mineurs classiques , tels que notamment les oligoéléments.

5. Additif selon l'une quelconque des revendications 1 à 4 **caractérisé en ce que** l'additif minéral hygroscopique est le chlorure de calcium ou le chlorure de magnesium.

6. Additif selon l'une quelconque des revendications 1 à 5 **caractérisé en ce que** l'on combine l'additif minéral hygroscopique a) avec un composé organique hydrophile b).

7. Additif selon l'une quelconque des revendications 1 à 6 **caractérisé en ce qu'**on utilise comme composant organique hydrophile b) un composé comme la glycérine ou la triéthanolamine (TEA) ou leurs mélanges.

8. Additif selon l'une quelconque des revendications 1 à 7 **caractérisé en ce que** comme solvant c), on utilisera l'eau ou un alcool ou un glycol ou polyglycol comme le polyéthylèneglycol PEG, et composés analogues.

9. Additif selon l'une quelconque des revendications 1 à 7 **caracterise en ce que** comme solvant c), on utilisera l'eau.

10. Additif selon l'une quelconque des revendications 1 à 9 **caractérisé en ce que** les solvants c) utilisables peuvent former tout ou partie du ou des composés organiques hydrophiles b), comme par exemple la triéthanolamine (TEA) ou un polyéthylèneglycol (PEG).

11. Additif selon l'une quelconque des revendications 1 à 7 **caractérisé en ce qu'**il est choisi parmi les suivants :
- une composition pondérale allant de 20 % à 40 % de chlorure de calcium, de 0 à 10 % de glycérine ou de triéthanolamine, et de 54 % à 80 % d'eau ou de mélange d'eau et de polyéthylène glycol ou d'éthylène glycol
- ou une composition pondérale allant de 30 % à 36 % de chlorure de magnésium, de 0 à 5 % de glycérine ou de triéthanolamine, et de 59 % à 70 % d'eau ou une composition pondérale ayant 36 % de nitrate de calcium ou de nitrate de magnésium, et 64 % d'eau
- ou une solution aqueuse saturée de chlorure de sodium.

12. Amendements et/ou amendements-engrais, **caractérisés en ce qu'**ils ont été traités par une quantité d'au moins un additif anti-poussière selon l'une quelconque des revendications 1 á 11 efficace pour leur conférer une qualité anti-poussière, éventuellement en mélange avec d'autres additifs mineurs en agronomie et compatibles.

13. Amendements et/ou amendements-engrais selon la revendication 12, **caractérisés en ce qu'**ils sont choisis parmi, ou comprennent, les suivants :
- Support minerai naturel de diametre median inférieur ou egal à 200 micrométres choisi par exemple parmi les carbonates de calcium naturels ou les carbonates doubles de calcium et de magnésium ou dolomies.
- éventuellement des composés tels que le phosphate naturel, le chlorure de potassium ou leurs mélanges ou bien encore le super triple phosphate ,
ainsi que les divers mélanges des produits pulvérulents ci-dessus, en proportions variées, et éventuellement en mélange avec d'autres additifs mineurs classiques à usage dans le secteur technique considéré, tels que notamment les oligoéléments,
et de préférence sont choisis parmi, ou comprennent, les "produits pulvérulents" suivants :
- Support minéral naturel de diamètre median inférieur ou egal a 100 micromètres choisi par exemple parmi les carbonates de calcium naturels ou les carbonates doubles de calcium et de magnesium ou dolomies,
- éventuellement des composés tels que le phosphate naturel, le chlorure de potassium ou leurs mélanges ou bien encore le super triple phosphate ,
ainsi que les divers mélanges des produits pulvérulents ci-dessus, en proportions variées connues, et
éventuellement en mélange avec d'autres additifs mineurs classiques à usage dans le secteur technique considéré, tels que notamment les oligoéléments.

14. Amendements et/ou amendements-engrais selon la revendication 12, **caractérisés en ce que** le quantité d'au moins un additif anti-poussière selon l'une quelconque des revendications 1 à 11 pouvant atteindre jusqu'à 2 % en poids, preféréntiellement entre 0,6 % et 1,6 % en poids et très préférentiellement égale a 1 % en poids par rapport au mélange total.

15. Procédé de préparation des amendements et/ou amendements-engrais selon l'une quelconque des revendications 12 à 14, **caracterise en ce qu'**il consiste a melanger intimement de façon spécifique lesdits produits pulvérulents ou poudre avec ladite quantité efficace d'additif(s) antipoussière.

16. Application des additifs, amendements et/ou amendements-engrais selon l'une quelconque des revendications 1 à 15 dans le domaine agricole.

## Patentansprüche

1. Antistaub-Zusatzstoff, der die Beherrschung des Fließens und der Handhabung von rohem Verbesserer-Düngemittel erlaubt, **dadurch gekennzeichnet, dass** er einen natürlichen, mineralischen Träger mit mittlerem Durchmesser kleiner oder gleich 200 Mikrometer umfasst, ausgewählt aus zum Beispiel den natürlichen Calciumcarbonaten oder den doppelten Carbonaten von Calcium und Magnesium oder Dolomiten, und dadurch, dass er mindestens einen hygroskopischen mineralischen Zusatzstoff umfasst, ausgewählt aus Calciumchlorid, Magnesiumchlorid, Magnesiumnitrat, Calciumnitrat und deren Salzen.

2. Zusatzstoff nach Anspruch 1, **dadurch gekennzeichnet, dass** er sich aus Folgendem zusammensetzt:
(a) aus mindestens einem hygroskopischen, mineralischen Zusatzstoff
(b) aus mindestens einem gewöhnlichen Lösemittel, welches ganz oder teilweise aus einer hydrophilen organischen Verbindung bestehen kann.

3. Zusatzstoff nach einem der Ansprüche 1 und 2, **dadurch gekennzeichnet, dass** er außerdem mindestens eine hydrophile organische Verbindung umfasst.

4. Zusatzstoff nach einem der Ansprüche 1 bis 3, **dadurch gekennzeichnet, dass** er an pulverförmige Produkte und Zusammensetzungen angepasst ist, die aus den folgenden Zusammensetzungen ausgewählt sind oder diese umfassen:
- gegebenenfalls Verbindungen wie natürliches Phosphat, Kaliumchlorid oder deren Mischungen sowie Tripelsuperphosphat,
ebenso wie diverse Mischungen von den obenstehenden pulverförmigen Produkten in verschiedenen Verhältnissen, und
gegebenenfalls gemischt mit anderen klassischen Zusatzstoffen in geringen Mengen zur Verwendung in dem betrachteten technischen Bereich, wie insbesondere Spurenelemente,
und vorzugsweise ausgewählt aus den folgenden "pulverförmigen Produkten" oder diese umfassend:
- natürliche mineralische Träger mit mittlerem Durchmesser kleiner als oder gleich 100 Mikrometer, ausgewählt aus zum Beispiel den natürlichen Calciumcarbonaten oder den doppelten Carbonaten von Calcium und Magnesium oder Dolomiten,
- gegebenenfalls Verbindungen wie natürliches Phosphat, Kaliumchlorid oder deren Mischungen sowie Tripelsuperphosphat,
ebenso wie diverse Mischungen von den obenstehenden pulverförmigen Produkten in verschiedenen bekannten Verhältnissen, und
gegebenenfalls gemischt mit anderen klassischen Zusatzstoffen in geringen Mengen, wie insbesondere Spurenelementen.

5. Zusatzstoff nach einem der Ansprüche 1 bis 4, **dadurch gekennzeichnet, dass** der hygroskopische, mineralische Zusatzstoff Calciumchlorid oder Magnesiumchlorid ist.

6. Zusatzstoff nach einem der Ansprüche 1 bis 5, **dadurch gekennzeichnet, dass** der hygroskopische, mineralische Zusatzstoff a) kombiniert wird mit einer hydrophilen organischen Verbindung b).

7. Zusatzstoff nach einem der Ansprüche 1 bis 6, **dadurch gekennzeichnet, dass** eine Verbindung wie Glycerin oder Triethanolamin (TEA) oder deren Mischungen als hydrophile organische Verbindung b) verwendet wird.

8. Zusatzstoff nach einem der Ansprüche 1 bis 7, **dadurch gekennzeichnet, dass** Wasser oder ein Alkohol oder ein Glycol oder Polyglycol wie Polyethylenglycol PEG und analoge Verbindungen als Lösemittel c) verwendet werden.

9. Zusatzstoff einem der Ansprüche 1 bis 7, **dadurch gekennzeichnet, dass** Wasser als Lösemittel c) verwendet wird.

10. Zusatzstoff nach einem der Ansprüche 1 bis 9, **dadurch gekennzeichnet, dass** die verwendbaren Lösemittel c), wie zum Beispiel Triethanolamin (TEA) oder ein Polyethylenglycol (PEG), alles oder einen Teil des oder der hydrophilen organischen Verbindung oder Verbindungen b) bilden können.

11. Zusatzstoff nach einem der Ansprüche 1 bis 7, **dadurch gekennzeichnet, dass** er aus den Folgenden ausgewählt wird:
- einer Gewichtszusammensetzung, reichend von 20% bis 40% Calciumchlorid, von 0 bis 10% Glycerin oder Triethanolamin und von 54% bis 80% Wasser oder der Mischung aus Wasser und dem Polyethylenglycol oder Ethylenglycol
- oder einer Gewichtszusammensetzung, reichend von 30 % bis 36 % Magnesiumchlorid, von 0 bis 5 % Glycerin oder Triethanolamin und von 59 % bis 70 % Wasser oder einer Gewichtszusammensetzung, reichend von 36% Calciumnitrat oder Magnesiumnitrat und 64 % Wasser
- oder einer gesättigten wässrigen Lösung von Natriumchlorid.

12. Verbesserer und/oder Verbesserer-Düngemittel, **dadurch gekennzeichnet, dass** sie mit einer Quantität von mindestens einem Antistaub-Zusatzstoff nach einem der Ansprüche 1 bis 11 behandelt wurden, die wirksam ist, ihnen eine Antistaubqualität zu verleihen, gegebenenfalls gemischt mit anderen landwirtschaftlichen und kompatiblen Zusatzstoffen in geringen Mengen.

13. Verbesserer und/oder Verbesserer-Düngemittel nach Anspruch 12, **dadurch gekennzeichnet, dass** sie aus den Folgenden ausgewählt sind oder diese umfassen:
- natürliche mineralische Träger mit mittlerem Durchmesser kleiner als oder gleich 200 Mikrometer, ausgewählt aus zum Beispiel den natürlichen Calciumcarbonaten oder den doppelten Carbonaten von Calcium und Magnesium oder Dolomiten.
- gegebenenfalls Verbindungen wie natürliches Phosphat, Kaliumchlorid oder deren Mischungen sowie Tripelsuperphosphat,
ebenso wie diverse Mischungen von den obenstehenden pulverförmigen Produkten in verschiedenen Verhältnissen, und
gegebenenfalls gemischt mit anderen klassischen Zusatzstoffen in geringen Mengen zur Verwendung in dem betrachteten technischen Bereich, wie insbesondere Spurenelemente,
und vorzugsweise ausgewählt aus den folgenden "pulverförmigen Produkten" oder diese umfassend:
- natürliche mineralische Träger mit mittlerem Durchmesser kleiner als oder gleich 100 Mikrometer, ausgewählt aus zum Beispiel den natürlichen Calciumcarbonaten oder den doppelten Carbonaten von Calcium und Magnesium oder Dolomiten,
- gegebenenfalls Verbindungen wie natürliches Phosphat, Kaliumchlorid oder deren Mischungen sowie Tripelsuperphosphat,
ebenso wie diverse Mischungen von den obenstehenden pulverförmigen Produkten in verschiedenen bekannten Verhältnissen, und
gegebenenfalls gemischt mit anderen klassischen Zusatzstoffen in geringen Mengen zur Verwendung in dem betrachteten technischen Bereich, wie insbesondere Spurenelemente.

14. Verbesserer und/oder Verbesserer-Düngemittel nach Anspruch 12, **dadurch gekennzeichnet, dass** die Quantität des mindestens einen Antistaub-Zusatzstoffes nach einem der Ansprüche 1 bis 11 bis zu 2 Gewichts-%, vorzugsweise zwischen 0,6 Gewichts-% und 1,6 Gewichts-% und besonders bevorzugt gleich 1 Gewichts-%, bezogen auf die Gesamtmischung, erreichen kann.

15. Zubereitungsverfahren von Verbesserern und/oder Verbesserer-Düngemitteln nach einem der Ansprüche 12 bis 14, **dadurch gekennzeichnet, dass** es aus dem innigen Mischen der pulverförmigen Produkte oder Puder mit der wirksamen Quantität der Antistaub-Zusatzstoff(e) auf spezifische Weise besteht.

16. Anwendung der Zusatzstoffe, Verbesserer und/oder Verbesserer-Düngemittel nach einem der Ansprüche 1 bis 15 im Agrarsektor.

## Claims

1. Dust-suppressant additive for controlling the flow and handling of raw soil improvers/fertilisers, **characterised in that** it comprises a natural mineral support with a median diameter of less than or equal to 200 micrometres chosen for example from natural calcium carbonates or double calcium and magnesium carbonates or dolomites, and **in that** it comprises at least one hygroscopic mineral additive chosen from calcium chloride, magnesium chloride, magnesium nitrate, calcium nitrate and salts thereof.

2. Additive according to claim 1, **characterised in that** it is composed of:
(a) at least one hygroscopic mineral additive
(b) at least one common solvent, which may, in whole or in part, consist of a hydrophilic organic compound.

3. Additive according to either claim 1 and 2, **characterised in that** it also comprises at least one hydrophilic organic compound.

4. Additive according to any of claims 1 to 3, **characterised in that** it is suitable for powdery products and compositions that are chosen from, or comprise, the following components:
- optionally compounds such as natural phosphate, potassium chloride or mixtures thereof or triple superphosphate,
as well as the various mixtures of the aforementioned powdery products, in varied proportions, and
optionally in a mixture with other conventional minor additives for use in the technical sector in question, such as in particular oligoelements,
and preferably are chosen from, or comprise, the following "powdery products":
- natural mineral support with a median diameter of less than or equal to 100 micrometres chosen for example from natural calcium carbonates or double calcium and magnesium carbonates or dolomites,
- optionally compounds such as natural phosphate, potassium chloride or mixtures thereof or triple superphosphate,
as well as the various mixtures of the aforementioned powdery products, in known varied proportions, and
optionally in a mixture with other conventional minor additives, such as in particular oligoelements.

5. Additive according to any of claims 1 to 4, **characterised in that** the hygroscopic mineral additive is calcium chloride or magnesium chloride.

6. Additive according to any of claims 1 to 5, **characterised in that** the hygroscopic mineral additive a) is combined with a hydrophilic organic compound b).

7. Additive according to any of claims 1 to 6, **characterised in that** use is made, as a hydrophilic organic compound b), of a compound such as glycerine or triethanolamine (TEA) or mixtures thereof.

8. Additive according to any of claims 1 to 7, **characterised in that** use will be made, as solvent c), of water or an alcohol or a glycol or polyglycol such as polyethylene glycol PEG, and similar compounds.

9. Additive according to any of claims 1 to 7, **characterised in that** water will be used as solvent c).

10. Additive according to any of claims 1 to 9, **characterised in that** the solvents c) that can be used may form all or some of the hydrophilic organic compound or compounds b), such as for example triethanolamine (TEA) or a polyethylene glycol (PEG).

11. Additive according to any of claims 1 to 7, **characterised in that** it is chosen from the following:
- a composition by weight ranging from 20% to 40% calcium chloride, 0 to 10% glycerine or triethanolamine, and 54% to 80% water or a mixture of water and polyethylene glycol or ethylene glycol
- or a composition by weight ranging from 30% to 36% magnesium chloride, 0 to 5% glycerine or triethanolamine, and 59% to 70% water or a composition by weight having 36% calcium nitrate or magnesium nitrate, and 64% water
- or a saturated aqueous solution of sodium chloride.

12. Soil improvers and/or soil improvers/fertilisers, **characterised in that** they have been treated with a quantity of at least one dust-suppressant additive according to any of claims 1 to 11, effective for conferring thereon a dust-suppressant quality, optionally in a mixture with other minor agronomic and compatible additives.

13. Soil improvers and/or soil improvers/fertilisers according to claim 12, **characterised in that** they are chosen from, or comprise, the following:
- natural mineral support with a median diameter of less than or equal to 200 micrometres chosen for example from natural calcium carbonates or double carbonates of calcium and magnesium or dolomites,
- optionally compounds such as natural phosphate, potassium chloride or mixtures thereof or triple superphosphate,
as well as various mixtures of the aforementioned powdery products, in varied proportions, and
optionally in a mixture with other conventional minor additives for use in the technical sector in question, such as in particular oligoelements,
and are preferably chosen from, or comprise, the following "powdery products":
- natural mineral support with a median diameter of less than or equal to 100 micrometres chosen for example from natural calcium carbonates or double carbonates of calcium and magnesium or dolomites,
- optionally compounds such as natural phosphate, potassium chloride or mixtures thereof or triple superphosphate,
as well as the various mixtures of the aforementioned powdery products, in known varied proportions, and
optionally in a mixture with other conventional minor additives for use in the technical sector in question, such as in particular oligoelements.

14. Soil improvers and/or soil improvers/fertilisers according to claim 12, **characterised in that** the quantity of at least one dust-suppressant additive according to any of claims 1 to 11 which may be as much as 2% by weight, preferentially between 0.6% and 1.6% by weight and highly preferentially equal to 1% by weight with respect to the total.

15. Method for preparing the soil improvers and/or soil improvers/fertilisers according to any of claims 12 to 14, **characterised in that** it consists of intimately mixing, in a specific fashion, said powdery products or powder with said effective quantity of dust-suppressant additive(s).

16. Application of the additives, soil improvers and/or soil improvers/fertilisers according to any of claims 1 to 15 in the agricultural field.
